# EUROPEAN PATENT APPLICATION

(11) **EP 3 993 225 A1**
(43) Date of publication of application: **04.05.2022**
(21) Application number: 21204935.7
(22) Date of filing: 27.10.2021
(51) Int. Cl.: H02K 1/18, H02K 5/20, H02K 9/19, H02K 15/14

(54) **ROTATING ELECTRICAL MACHINE AND METHOD FOR MANUFACTURING A ROTATING ELECTRICAL MACHINE**

(30) Priority: 28.10.2020 DE 102020213532
(71) Applicant: Valeo Siemens eAutomotive Germany GmbH, 91056 Erlangen (DE)
(72) Inventor: Spirk, Daniel, 97616 Bad Neustadt a.d.Saale (DE)

(57) **Abstract**

The rotating electrical machine (100) comprises: a stator (102) and an housing (116) extending around the stator (102).

The housing (116) is provided with a deformation having the shape of a bump (128) projecting inwardly for cooperating with the stator (102) for preventing the stator (102) from rotating with respect to the housing (116).

## Description

The present invention relates to a rotating electrical machine and a method for manufacturing a rotating electrical machine. The rotating electrical machine may be used for example in an electric car for driving wheels of the electric car.

A rotating electrical machine typically comprises :
- a stator; and
- an housing extending around the stator.

In the prior art, the stator is secured to the housing by press-fit: the housing is heated up and dilates, then the stator is inserted into the dilated housing. When the housing cools down, it presses radially against the stator, thereby securing the stator to the housing.

However, for high torque, it may happen that the stator rotates with respect to the housing.

Another method known from the prior art for securing the stator to the housing is to provide the housing with through holes and inserting pins into the through holes, these pins projecting inwardly from the housing and cooperating with the stator for preventing the stator from rotating with respect to the housing.

However, coolant flow conduits are often provided in the housing. The presence of through holes could therefore lead to leakage of the coolant.

It may thus be desirable to provide a rotating electrical machine which makes it possible to overcome at least some of the aforementioned problems and constraints.

An object of the invention is therefore a rotating electrical machine comprising:
- a stator; and
- an housing extending around the stator;
characterized in that the housing is provided with a deformation having the shape of a bump projecting inwardly for cooperating with the stator for preventing the stator from rotating with respect to the housing.

Thanks to the invention, the bump prevents the stator from rotating with respect to the housing generally better than with a simple press-fit, while not requiring through holes that could lead to cooling fluid linkage.

Optionally, the stator has a recess in which the bump extends.

Also optionally, the housing is provided with a blind hole with an outward opening and a bottom comprising the bump, and the rotating electrical machine comprises a rigid piece located inside the blind hole, against the bottom.

Also optionally, the blind hole opens in a coolant flow conduit.

Also optionally, the rotating electrical machine further comprises an outer housing extending around said housing provided with the bump, and the two housings define together the coolant flow conduit.

Also optionally, the rigid piece is maintained inside the blind hole.

Also optionally, the rigid piece is maintained inside the blind hole by walls of the blind hole folded on the rigid piece opposite the bottom.

Also optionally, the rigid piece is maintained inside the blind hole by glue provided in the blind hole.

Another object of the invention is a method for manufacturing a rotating electrical machine, comprising:
- placing a housing around a stator;
characterized by:
- deforming the housing to create a bump projecting inwardly for cooperating with the stator so as to prevent the stator from rotating with respect to the housing.

Optionally, the method further comprises:
- making a blind hole in the inner housing, with an outward opening and a bottom; and
- inserting a rigid piece inside the blind hole, against the bottom; and
said step of deforming the housing to create the bump, includes pushing the rigid piece against the bottom so as to deform the bottom and create the bump.

The invention will be better understood with the aid of the description which follows, given only by way of example and made with reference to the accompanying drawings in which:
Figure 1 is a cross-sectional view of a rotating electrical machine according to an example of the invention,
Figure 2 is a block diagram of a method according to an example of the invention for manufacturing a rotating electrical machine, and
Figures 3 to 7 is a cross-sectional view of a rotating electrical machine during manufacturing.

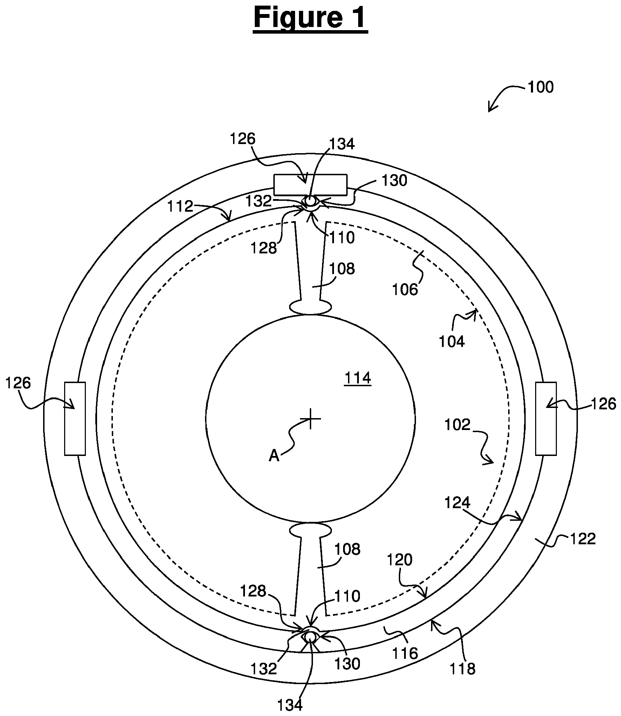

Referring to figure 1, a rotating electrical machine 100 according to an example of the invention will now be described.

The electrical machine 100 is for example asynchronous. Also for example, the electrical machine 100 is designed to provide a high torque, for example included in the range 250 to 650 Nm.

The rotating electrical machine 100 first comprises a stator 102 for generating a stator magnetic field.

In the described example, the stator 102 comprises a core 104 including a cylindrical shell 106 and radial legs 108 (only two are shown) extending inwardly. The stator 102 further comprises coils (not shown) wound around the legs. The core 104 comprises for example a lamination stack.

Preferably, the stator 102 is provided with recesses 110. In the described example, the recesses 110 comprises longitudinal grooves extending parallel to an rotation axis A on an outer surface 112 of the core 104 of the stator 102, e.g. on an outer surface of the cylindrical shell 106.

The rotating electrical machine 100 also comprises a rotor 114 for generating a rotor magnetic field cooperating with the stator magnetic field to make the rotor 114 rotate around the rotation axis A with respect to the stator 102.

The rotating electrical machine 100 also comprises an inner housing 116 extending around the stator 102 and having an outer surface 118 and an inner surface 120 facing the outer surface of the stator 102. In the described example, the inner housing 116 is cylindrical. For example, the inner housing 116 is in aluminum.

The rotating electrical machine 100 also comprises an outer housing 122 extending around the inner housing 116 and having an inner surface 124 facing the outer surface 118 of the inner housing 116.

The rotating electrical machine 100 also comprises conduits 126 in which a coolant is intended to flow to cool down the rotating electrical machine 100.

For example, each conduit 126 may be formed by the inner housing 116 and the outer housing 122. More precisely, for example, the inner housing 116 may be provided with a groove forming a half conduit extending on its outer surface 118 and the outer housing 122 may be provided with a complementary groove forming a complementary half conduit extending on its inner surface 124. Alternatively, each conduit 126 may be formed by a groove provided in the outer surface 118 of the inner housing 116 and covered by the outer housing 122.

Furthermore, the conduits 126 may extend in the axial direction of the rotating electrical machine 100 or extend in any other direction. For instance, the conduits 126 may extend along a spiral around the axial direction of the rotating electrical machine 100.

Furthermore, the inner housing 116 is provided with at least one deformation having the shape of a bump projecting inwardly. Two bumps 128 are shown on figure 1. Each bump 128 is designed for cooperating with the stator 102 for preventing the stator 102 from rotating with respect to the inner housing 116, around the rotation axis A, during operation of the rotating electrical machine 100.

For example, the bumps 128 may extend in respective recesses 110 of the stator 102.

Also for example, a blind hole 130 is provided on the outer surface 118 of the inner housing 116. In this manner, the blind hole 130 has an outward opening and a bottom 132 deformed so as to form the bump 128. The bump 128 can be sufficiently rigid to prevent alone any rotation between the stator 102 and the housing 116.

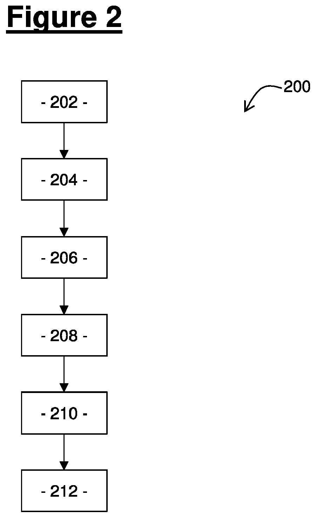

However, the bottom 132 may not be rigid enough to prevent a rotation of the stator 102 with respect to the housing 116, for instance because there is not enough width between the outer surface 118 and the inner surface 120 of the inner housing 116. Then, a rigid piece 134 may be located inside the blind hole 130 in order to rigidify the bump 128. This rigid piece 134 preferably presses against the bottom 132. The rigid piece 134 comprises for example a steel ball or a dowel pin. As it will be explained later with reference to figures 2 to 7, the rigid piece 134 may also be used to deform the bottom 132 to create the bump 128.

Preferably, walls 136 of the blind hole 130 are folded on the rigid piece 134, opposite to the bottom 132, for maintaining the rigid piece 134 inside the blind hole 130. In addition, glue may be added in the blind hole 130 to maintain the rigid piece 134 inside the blind hole 130. Alternatively, only glue could be used for this purpose.

Referring to figures 2 to 7, a method 200 according to the invention for manufacturing the rotating electrical machine 100 of figure 1 will now be described.

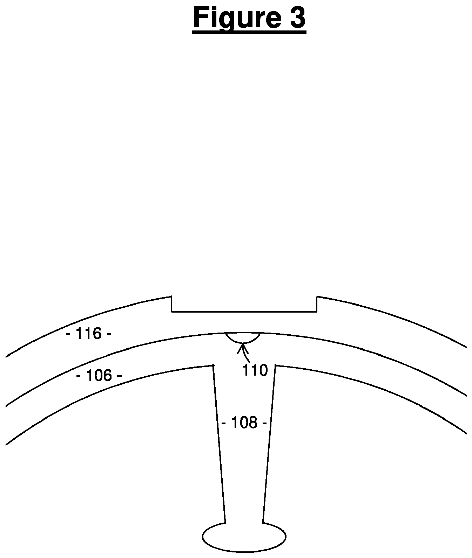

At a step 202, the stator 102 is inserted into the inner housing 116. For example, the inner housing 116 is heated up to dilate. The stator 102 is then inserted into the dilated inner housing 116. The inner housing 116 then cools down and presses against the stator 102. Alternatively, the stator 102 is inserted without heating the inner housing 116. The result is illustrated on figure 3.

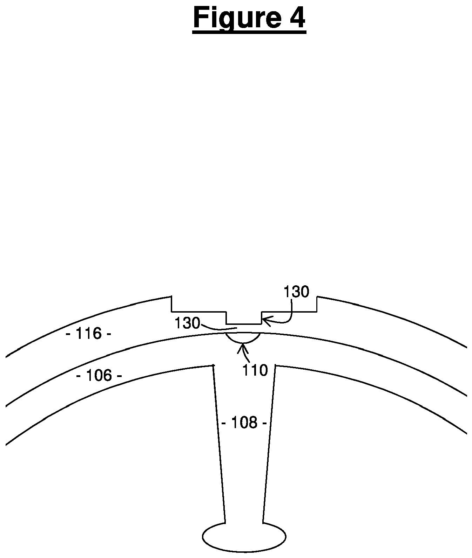

Back to figure 2, at a step 204, the blind hole 130 is made on the outer surface 118 of the inner housing 116, in particular inside one of the half conduits or outside the half conduits. Because the stator 102 was previously inserted into the inner housing 116 at step 202, it is possible to make the blind hole 130 at a position radially aligned with one of the recesses 110 of the stator 102. The result is illustrated on figure 4. Alternatively, the blind hole 130 could be made before inserting the stator 102 into the inner housing 116.

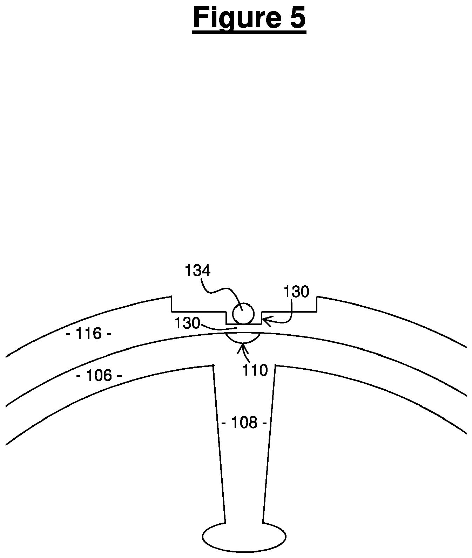

Back to figure 2, at a step 206, the rigid piece 134 is inserted into the blind hole 130 via the upward opening, against the bottom 132. The result is illustrated on figure 5.

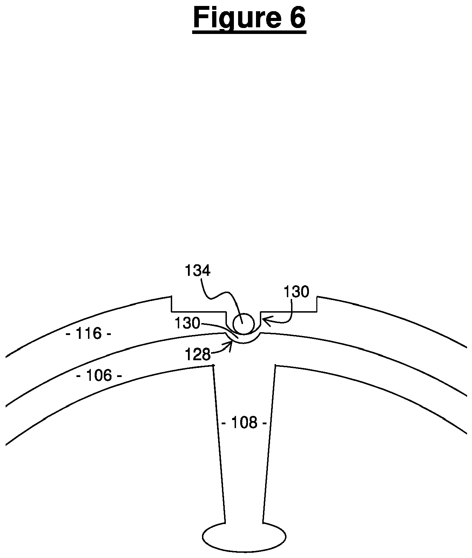

Back to figure 2, at a step 208, the rigid piece 134 is pushed against the bottom 132 so as to deform the bottom 132 and create the bump 128. The result is illustrated on figure 6.

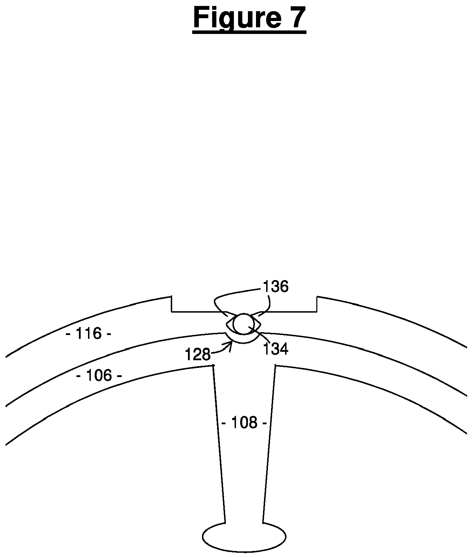

At a step 210, the walls 136 of the blind hole 130 are folded on the rigid piece 134. The result is illustrated on figure 7.

At a step 212, glue is inserted in the blind hole 130 to glue the rigid piece 134 to the inner housing 116. Preferably, in order to avoid turbulences in the cooling fluid, the blind hole 130 is filled with the glue up until its upper edge.

In other embodiments, only one of steps 210 and 212 could be realized to maintain the rigid piece 134 inside the blind hole 130.

It is clear that a rotating electrical machine such as the one described above allows the stator to be fixed to the housing.

It will also be noted that the invention is not limited to the embodiments described above. It will indeed appear to those skilled in the art that various modifications can be made to the embodiments described above, in the light of the teaching which has just been disclosed.

In the previous detailed description of the invention, the used terms should not be interpreted as limiting the invention to the embodiments presented in the present description, but should be interpreted to include all the equivalents within the reach of those skilled in the art by applying their general knowledge to the implementation of the teaching which has just been disclosed.

## Claims

1. Rotating electrical machine (100) comprising:
- a stator (102); and
- an housing (116) extending around the stator (102);
**characterized in that** the housing (116) is provided with a deformation having the shape of a bump (128) projecting inwardly for cooperating with the stator (102) for preventing the stator (102) from rotating with respect to the housing (116).

2. Rotating electrical machine (100) according to claim 1, wherein the stator (102) has a recess (110) in which the bump (128) extends.

3. Rotating electrical machine (100) according to claim 1 or 2, wherein the housing (116) is provided with a blind hole (130) with an outward opening and a bottom (132) comprising the bump (128), and comprising a rigid piece (134) located inside the blind hole (130), against the bottom (132).

4. Rotating electrical machine (100) according to claim 3, wherein the blind hole (130) opens in a coolant flow conduit (126).

5. Rotary electrical machine (100) according to claim 4, further comprising an outer housing (122) extending around said housing (116) provided with the bump (128), and wherein the two housings (116, 122) define together the coolant flow conduit (126).

6. Rotating electrical machine (100) according to any of claims 3 to 5, wherein the rigid piece (134) is maintained inside the blind hole (130).

7. Rotating electrical machine (100) according to claim 6, wherein the rigid piece (134) is maintained inside the blind hole (130) by walls (136) of the blind hole (130) folded on the rigid piece (134) opposite the bottom (132).

8. Rotating electrical machine (100) according to claim 6 or 7, wherein the rigid piece (134) is maintained inside the blind hole (130) by glue provided in the blind hole (130).

9. Method (200) for manufacturing a rotating electrical machine (100), comprising:
- placing (202) a housing (116) around a stator (102);
**characterized by**:
- deforming (208) the housing (116) to create a bump (128) projecting inwardly for cooperating with the stator (102) so as to prevent the stator (102) from rotating with respect to the housing (116).

10. Method (200) according to claim 9, comprising:
- making (204) a blind hole (130) in the inner housing (116), with an outward opening and a bottom (132); and
- inserting a rigid piece (134) inside the blind hole (130), against the bottom (132); and
said step of deforming (208) the housing (116) to create the bump (128), including pushing the rigid piece (134) against the bottom (132) so as to deform the bottom (132) and create the bump (128).
